# EUROPEAN PATENT SPECIFICATION

(11) **EP 3 296 048 B1**
(45) Date of publication and mention of the grant of the patent: **29.07.2020**
(21) Application number: 17155639.2
(22) Date of filing: 10.02.2017
(51) Int. Cl.: B23D 59/00, B27B 5/22, B27B 5/24

(54) **DUST-REDUCED SAW AND METHOD OF USING THE SAME**
STAUBREDUZIERTE SÄGE UND VERFAHREN ZU IHRER VERWENDUNG
SCIE À ÉMISSION DE POUSSIÈRE RÉDUITE ET SON UTILISATION

(30) Priority: 20.09.2016 CN 201610832951
(43) Date of publication of application: 21.03.2018
(73) Proprietor: JIFA Group Co., Ltd., Dongyang City, Zhejiang 322121 (CN)
(72) Inventor: Li, Guobing, Dongyang City, Zhejiang 322121 (CN); Wang, Ji, Dongyang City, Zhejiang 322121 (CN)
(74) Representative: Ström & Gulliksson AB

(56) References cited:
- EP-A2- 1 484 127
- WO-A1-2015/102906
- CN-U- 205 112 036
- DE-A1- 3 521 839
- US-A1- 2010 269 654

## Description

### TECHNICAL FIELD

The present invention relates to the cutting tool technology, and more particularly to a dust-reduced saw and a method of using the same.

### BACKGROUND

Common cutting tools include handsaws and bench saws, with the bench saw mainly composed of a sliding table, a working desk, a cross ruler, a slide base, a main saw, a slotting saw and other components. In the prior art, a vacuuming function is rarely used.

The Chinese utility model publication CN204076398U discloses a dust-reduced saw, which includes a cabinet having a panel at the upper end, the panel being provided at the lower end with a blade cover for receiving scattered sawdust, the blade cover being provided with a cutting device for cutting wood products, the cutting device being provided with a lifting device and an angle-adjusting device for adjusting the cutting device, the blade cover being provided at the lower end with a vacuum cleaner for storing sawdust; however, this dust-reduced saw has a complex structure, needs an additional vacuum motor, is costly, and is prone to failure and other technical problems.

EP 1484127 A discloses a motor driven power tool having an internal dust collection system. A single electric motor drives the working member such as a saw or sander and simultaneously drives an air pump which acts as a collector vacuum for debris created when the power tool is in use. A dust collector shroud surrounds a portion of the cutting member and forms an outlet connected to the air pump inlet.

In particular, this document discloses a saw comprising a frame provided with a worktable board, with a saw blade arranged between the frame and the worktable board; wherein the saw blade is driven by a saw blade motor, and is arranged between a left blade cover and a right blade cover that are located under the worktable board, with the left blade cover and the right blade cover forming an enclosed space; and wherein a first dust outlet, located below the left blade cover and the right blade cover, is connected with a vacuum cleaner, which is driven by the saw blade motor; wherein the second pulley drives a vacuum blade in a vacuum cover to rotate via a transmission shaft, the vacuum cover being provided with a vacuum port and a second dust outlet, the first dust outlet being connected to the vacuum port via a vacuum tube, the second dust outlet being connected to a dust bag.

### SUMMARY

A purpose of the present invention is to provide a dust-reduced saw with a simple structure, low cost, a good vacuuming effect, a self-vacuuming function and convenient maintenance, so as to overcome the shortcomings of the prior art.

Another purpose of the present invention is to provide a method of using said dust-reduced saw. These purposes are achieved by the technique set forth in the appended independent claims 1 and 7; preferred embodiments thereof being defined in the dependent claims 1-6.

According to the invention, a saw is provided, comprising a frame provided with a worktable board, with a saw blade arranged between the frame and the worktable board; the saw blade is driven by a saw blade motor, and is arranged between a left blade cover and a right blade cover that are located under the worktable board, with the left blade cover and the right blade cover forming an enclosed space; a first dust outlet, located below the left blade cover and the right blade cover, is connected with a vacuum cleaner, which is driven by the saw blade motor, wherein the vacuum cleaner includes a first pulley, which is connected with the rear end of a motor shaft of the saw blade motor and with a second pulley through a belt; the second pulley drives a vacuum blade in a vacuum cover to rotate via a transmission shaft, the vacuum cover being provided with a vacuum port and a second dust outlet, the first dust outlet being connected to the vacuum port via a vacuum tube, the second dust outlet being connected to a dust bag and wherein the

left blade cover is provided with a notch, which is provided inside with a movable cover that is in active connection, the movable cover being inserted into the notch and then fixed by a screw or by buckles.

In an embodiment, the saw blade motor may be connected to a motor frame, which is fixed to the frame.

In another embodiment, the vacuum cover includes a left vacuum cover provided with a second vacuum port and a right vacuum cover provided with a dust outlet, with the left and right vacuum covers fixed to the motor frame.

Preferably, the left blade cover and the right blade cover are of a funnel-like structure.

The frame may be provided on the front side with a front panel, on which are provided a number of switches.

The saw blade may be provided with an accompanying plate that moves up and down and/or obliquely swings together with the saw blade, the accompanying plate being connected with a protection cover.

In a second aspect of the invention, a method of using the above saw comprises the following steps:
(1) Putting raw materials onto the worktable board, and switching on the saw so that the saw blade motor drives the saw blade to rotate and cut;
(2) the dust resulted from cutting goes into an enclosed space formed by the left and right blade covers, so that no dust overflows;
(3) the saw blade motor drives the first pulley to rotate, which drives the second pulley to rotate through a belt; the second pulley drives the vacuum blade to rotate by driving the transmission shaft, so that negative pressure is formed in the vacuum cover and the dust in the step (2) is inhaled into the vacuum cover; and
(4) the dust in the vacuum cover enters the dust bag via the second dust outlet, with the dust bag in active connection and allowing regular cleaning, wherein the left blade cover is provided with a notch, which is provided inside with a movable cover that is in active connection, the movable cover being inserted into the notch and then fixed by a screw or by buckles; the saw blade motor is connected to the motor frame, which is fixed to the frame; the vacuum cover includes a left vacuum cover provided with a second vacuum port and a right vacuum cover provided with a dust outlet, with the left and right vacuum covers fixed to the motor frame; the left blade cover and the right blade cover are of a funnel-like structure; the frame is provided on the front side with a front panel, on which are provided a number of switches; the saw blade is provided with an accompanying plate that moves up and down and/or obliquely swings together with the saw blade, the accompanying plate being connected with a protection cover.

The present invention has the following advantages and effects :
1. The frame in the present invention is provided with a worktable board, with a saw blade arranged between the frame and the worktable board; the saw blade is driven by a saw blade motor, and is arranged between a left blade cover and a right blade cover that are located under the worktable board, with the left blade cover and the right blade cover forming an enclosed space; a first dust outlet, located below the left blade cover and the right blade cover, is connected with a vacuum cleaner, which is driven by the saw blade motor; thus the present invention has a simple structure, low cost, a good vacuuming effect, a built-in vacuuming function, convenient maintenance and other advantages.
2. The vacuum cleaner in the present invention includes a first pulley, which is connected with the rear end of a motor shaft of the saw blade motor and with a second pulley through a belt; the second pulley drives a vacuum blade in a vacuum cover to rotate via a transmission shaft, the vacuum cover being provided with a vacuum port and a second dust outlet, the first dust outlet being connected to the vacuum port via a vacuum tube, the second dust outlet being connected to a dust bag; thus the present invention can use one motor to drive the saw blade and vacuum, having low cost, good adaptability and high stability.
3. The left blade cover in the present invention is provided with a notch, which is provided inside with a movable cover that is in active connection, which, compared to the prior art, allows the removable cover to be removed with a tool and the saw blade to be removed and polished, having a good use effect.
4. The saw blade motor in the present invention is connected with the motor frame, which is fixed to the frame, having good stability.
5. The vacuum cover in the present invention includes a left vacuum cover provided with a second vacuum port and a right vacuum cover provided with a dust outlet, with the left and right vacuum covers fixed to the motor frame and able to follow it, having a good use effect.
6. The left blade cover and the right blade cover in the present invention are of a funnel-like structure, which facilitates dust collection and leakage.
7. The saw blade in the present invention is provided with an accompanying plate that moves up and down and/or obliquely swings together with the saw blade, the accompanying plate being connected with a protection cover, having high safety.

### BRIEF DESCRIPTION OF THE DRAWINGS

Fig. 1 is an exploded structural schematic view of a dust-reduced saw;
Fig. 2 is a structural schematic view at the vacuum cleaner of the present invention; and
Fig. 3 is an exploded structural schematic view of the vacuum cleaner of the present invention.

**List of reference signs:**

| | | | |
|---|---|---|---|
| 1 | A frame | 2 | A worktable board |
| 3 | A saw blade | 4 | A saw blade motor |
| 5 | A left blade cover | 6 | A right blade cover |
| 7 | A first dust outlet | 8 | A first pulley |
| 9 | A motor shaft | 10 | A belt |
| 11 | A second pulley | 12 | A transmission shaft |
| 13 | A vacuum blade | 14 | A vacuum cover |
| 15 | A dust bag | 16 | A movable cover |
| 17 | A motor frame | 18 | A front panel |
| 19 | An accompanying plate | 20 | A protection cover |
| 21 | A vacuum tube | 22 | A belt cover |

### DETAILED DESCRIPTION

The present invention will be described in further detail below with reference to drawings and examples, so as to enable those skilled in the art to understand.

### Example 1:

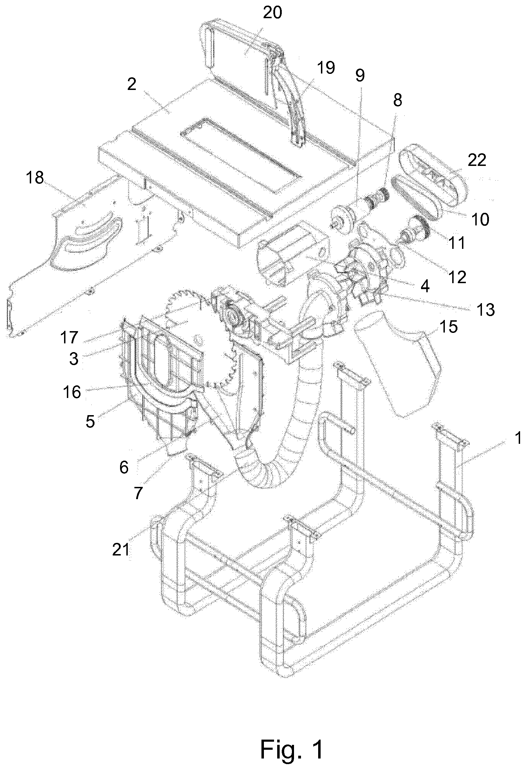

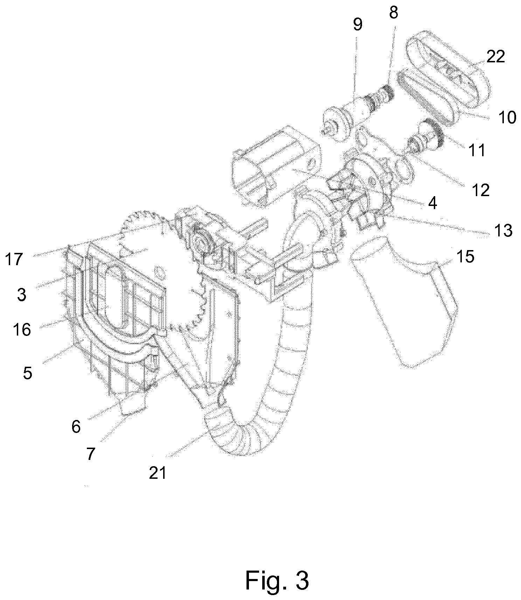

As shown in Figs. 1-3, a saw which does not generate dust in operation (dust-free) or which at least is designed as a dust-reduced saw is provided, comprising a frame provided with a worktable board, with a saw blade arranged between the frame and the worktable board; the saw blade is driven by a saw blade motor, and is arranged between a left blade cover and a right blade cover that are located under the worktable board, with the left blade cover and the right blade cover forming an enclosed space; a first dust outlet, located below the left blade cover and the right blade cover, is connected with a vacuum cleaner, which is driven by the saw blade motor.

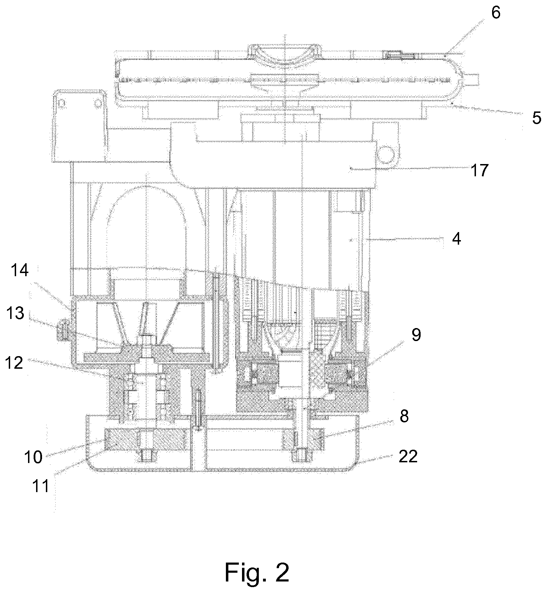

As shown in Figs. 2-3, the vacuum cleaner in this example includes a first pulley, which is connected with the rear end of a motor shaft of the saw blade motor and with a second pulley through a belt, with the belt provided outside with a belt cover; the second pulley drives the vacuum blade to rotate via the transmission shaft, the vacuum blade being placed in the vacuum cover and provided with a vacuum port and a second dust outlet, the first dust outlet being connected to the vacuum port via a vacuum tube, the second dust outlet being connected to a dust bag.

The left blade cover, according to the invention, is provided with a notch, which is provided inside with a movable cover that is in active connection; specifically, the movable cover is inserted into the notch and then fixed by a screw, which, of course, can also be achieved with buckles.

The saw blade motor in this example is connected with the motor frame, which is fixed to the frame; the frame is provided on the front side with a front panel, on which are provided a number of switches including a start switch.

The vacuum cover in this example includes a left vacuum cover provided with a second vacuum port and a right vacuum cover provided with a dust outlet, with the left and right vacuum covers fixed to the motor frame; the left blade cover and the right blade cover are of a funnel-like structure.

The saw blade in this example is provided with an accompanying plate that moves up and down and/or obliquely swings together with the saw blade, the accompanying plate being connected with a protection cover.

A method of using the above dust-reduced saw comprises the following steps:
(1) Putting raw materials onto the worktable board, and switching on the dust-reduced saw so that the saw blade motor drives the saw blade to rotate and cut;
(2) the dust resulted from cutting goes into an enclosed space formed by the left and right blade covers, so that no dust overflows;
(3) the saw blade motor drives the first pulley to rotate, which drives the second pulley to rotate through a belt; the second pulley drives the vacuum blade to rotate by driving the transmission shaft, so that negative pressure is formed in the vacuum cover and the dust in the step (2) is inhaled into the vacuum cover; and
(4) the dust in the vacuum cover enters the dust bag via the second dust outlet, with the dust bag in active connection and allowing regular cleaning wherein the left blade cover is provided with a notch, which is provided inside with a movable cover that is in active connection, the movable cover being inserted into the notch and then fixed by a screw or by buckles; the saw blade motor is connected to the motor frame, which is fixed to the frame; the vacuum cover includes a left vacuum cover provided with a second vacuum port and a right vacuum cover provided with a dust outlet, with the left and right vacuum covers fixed to the motor frame; the left blade cover and the right blade cover are of a funnel-like structure; the frame is provided on the front side with a front panel, on which are provided a number of switches; the saw blade is provided with an accompanying plate that moves up and down and/or obliquely swings together with the saw blade, the accompanying plate being connected with a protection cover.

### Example 2:

This example is distinguished from Example 1 in the following aspects: In this example, there is provided a lifting device and an angle-adjusting device for adjusting the blade.

The above-described embodiments are preferred embodiments of the present invention; however, the present invention is not limited thereto, and other variations that do not depart from the technical solution of the present invention as defined by the claims or other equivalent displacements are included within the scope of protection of the present invention as defined by the claims.

## Claims

1. A saw comprising a frame (1) provided with a worktable board (2), with a saw blade (3) arranged between the frame (1) and the worktable board (2); wherein the saw blade (3) is driven by a saw blade motor (4), and is arranged between a left blade cover (5) and a right blade cover (6) that are located under the worktable board (2), with the left blade cover (5) and the right blade cover (6) forming an enclosed space; and wherein a first dust outlet (7), located below the left blade cover (5) and the right blade cover (6), is connected with a vacuum cleaner, which is driven by the saw blade (3) motor;
wherein the vacuum cleaner includes a first pulley (8), which is connected with the rear end of a motor shaft (9) of the saw blade motor (4) and with a second pulley (11) through a belt (10); the second pulley (11) drives a vacuum blade (13) in a vacuum cover (14) to rotate via a transmission shaft (12), the vacuum cover (14) being provided with a vacuum port and a second dust outlet, the first dust outlet (7) being connected to the vacuum port via a vacuum tube (21), the second dust outlet being connected to a dust bag (15); and
wherein the left blade cover (5) is provided with a notch, which is provided inside with a movable cover (16) in active connection, the movable cover (16) being inserted into the notch and then fixed by a screw or by buckles.

2. The saw according to claim 1, wherein the saw blade motor (4) is connected to a motor frame (17), which is fixed to the frame.

3. The saw according to claim 1, wherein the vacuum cover (14) includes a left vacuum cover provided with a second vacuum port and a right vacuum cover provided with a dust outlet, with the left and right vacuum covers fixed to the motor frame (17).

4. The saw according to any one of the preceding claims, wherein the left blade cover (5) and the right blade cover (6) are of a funnel-like structure.

5. The saw according to any one of the preceding claims, wherein the frame (1) is provided on the front side with a front panel (18), on which are provided a number of switches.

6. The saw according to any one of the preceding claims, wherein the saw blade (3) is provided with an accompanying plate (19) that moves up and down and/or obliquely swings together with the saw blade (3), the accompanying plate (19) being connected with a protection cover (20).

7. A method of using the saw according to any of claims 1 to 6, the method comprising the following steps:
(1) putting raw materials onto the worktable board (2), and switching on the saw so that the saw blade motor (4) drives the saw blade (3) to rotate and cut;
(2) the dust resulted from cutting goes into an enclosed space formed by the left and right blade covers (5, 6), so that no dust overflows;
(3) the saw blade motor (4) drives the first pulley (8) to rotate, which drives the second pulley (11) to rotate through a belt (10); the second pulley (11) drives the vacuum blade (13) to rotate by driving the transmission shaft (12), so that negative pressure is formed in the vacuum cover (14) and the dust in the step (2) is inhaled into the vacuum cover (14); and
(4) the dust in the vacuum cover (14) enters the dust bag (15) via the second dust outlet, with the dust bag (15) in active connection and allowing regular cleaning;
wherein the left blade cover (5) is provided with a notch, which is provided inside with a movable cover (16) that is in active connection, the movable cover (16) being inserted into the notch and then fixed by a screw or by buckles; the saw blade motor (4) is connected to the motor frame (17), which is fixed to the frame (1); the vacuum cover (14) includes a left vacuum cover provided with a second vacuum port and a right vacuum cover provided with a dust outlet, with the left and right vacuum covers fixed to the motor frame (17); the left blade cover (5) and the right blade cover (6) are of a funnel-like structure; the frame (1) is provided on the front side with a front panel (18), on which are provided a number of switches; the saw blade (3) is provided with an accompanying plate (19) that moves up and down and/or obliquely swings together with the saw blade (3), the accompanying plate (19) being connected with a protection cover (20).

## Patentansprüche

1. Säge umfassend einen Rahmen (1), der mit einer Arbeitstischplatte (2) versehen ist, ein Sägeblatt (3), welches zwischen dem Rahmen (1) und der Arbeitstischplatte (2) angeordnet ist; wobei das Sägeblatt (3) von einem Sägeblattmotor (4) angetrieben wird und zwischen einer linken Blattabdeckung (5) und einer rechten Blattabdeckung (6) angeordnet ist, die sich unter der Arbeitstischplatte (2) befinden, wobei die linke Blattabdeckung (5) und die rechte Blattabdeckung (6) einen geschlossenen Raum bilden; und wobei ein erster Staubauslass (7), der sich unterhalb der linken Blattabdeckung (5) und der rechten Blattabdeckung (6) befindet, mit einem Staubsauger verbunden ist, der von dem Sägeblattmotor (3) angetrieben wird;
wobei der Staubsauger eine erste Riemenscheibe (8) umfasst, die mit dem hinteren Ende einer Motorwelle (9) des Sägeblattmotors (4) und mit einer zweiten Riemenscheibe (11) über einen Riemen (10) verbunden ist; wobei die zweite Riemenscheibe (11) eine Vakuumschaufel (13) in einer Vakuumabdeckung (14) antreibt, um sich über eine Getriebewelle (12) zu drehen, wobei die Vakuumabdeckung (14) mit einem Vakuumanschluss und einem zweiten Staubauslass versehen ist, wobei der erste Staubauslass (7) über eine Vakuumröhre (21) mit dem Vakuumanschluss verbunden ist, wobei der zweite Staubauslass mit einem Staubbeutel (15) verbunden wird; und
wobei die linke Blattabdeckung (5) mit einer Kerbe versehen ist, die innen mit einer beweglichen Abdeckung (16) in aktiver Verbindung versehen ist, wobei die bewegliche Abdeckung (16) in die Kerbe eingeführt ist und anschließend über Schrauben oder durch Schnallen fixiert ist.

2. Säge nach Anspruch 1, wobei der Sägeblattmotor (4) mit einem Motorrahmen (17) verbunden ist, der an dem Rahmen befestigt ist.

3. Säge nach Anspruch 1, wobei die Vakuumabdeckung (14) eine linke Vakuumabdeckung, die mit einem zweiten Vakuumanschluss versehen ist, und eine rechte Vakuumabdeckung, die mit einem Staubauslass versehen ist, umfasst, wobei die linke und rechte Vakuumabdeckung an dem Motorrahmen (17) befestigt sind.

4. Säge nach einem der vorangehenden Ansprüche, wobei die linke Blattabdeckung (5) und die rechte Blattabdeckung (6) eine trichterartige Struktur aufweisen.

5. Säge nach einem der vorangehenden Ansprüche, wobei der Rahmen (1) auf der Vorderseite mit einer Frontplatte (18) versehen ist, auf der eine Anzahl von Schaltern vorgesehen sind.

6. Säge nach einem der vorangehenden Ansprüche, wobei das Sägeblatt (3) mit einer Begleitplatte (19) versehen ist, die sich auf und ab bewegt und/oder schräg zusammen mit dem Sägeblatt (3) schwingt, wobei die Begleitplatte (19) mit einer Schutzabdeckung (20) verbunden ist.

7. Verfahren zur Verwendung der Säge nach einem der Ansprüche 1 bis 6, wobei das Verfahren die folgenden Schritte umfasst:
(1) Einbringen von Rohstoffen auf die Arbeitstischplatte (2) und Einschalten der Säge, so dass der Sägeblattmotor (4) das Sägeblatt (3) zum Drehen und Schneiden antreibt;
(2) wobei der beim Schneiden entstehende Staub in einen geschlossenen Raum gelangt, der von der linken und rechten Blattabdeckung (5, 6) gebildet wird, so dass kein Staub austritt;
(3) wobei der Sägeblattmotor (4) die erste Riemenscheibe (8) antreibt, um sich zu drehen, was die zweite Riemenscheibe (11) antreibt, um sich durch einen Riemen (10) zu drehen; wobei die zweite Riemenscheibe (11) die Vakuumschaufel (13) antreibt, indem sie die Getriebewelle (12) antreibt, so dass sich in der Vakuumabdeckung (14) ein Unterdruck bildet und der Staub in der Stufe (2) in die Vakuumabdeckung (14) hineingezogen wird; und
(4) wobei der Staub in der Vakuumabdeckung (14) über den zweiten Staubauslass in den Staubbeutel (15) gelangt, wobei sich der Staubbeutel (15) in aktiver Verbindung befindet und eine regelmäßige Reinigung ermöglicht;
wobei die linke Blattabdeckung (5) mit einer Kerbe versehen ist, die innen mit einer beweglichen Abdeckung (16) versehen ist, die in aktiver Verbindung steht; wobei die bewegliche Abdeckung (16) in die Kerbe eingeführt ist und anschließend über eine Schraube oder durch Schnallen fixiert wird; wobei der Sägeblattmotor (4) mit dem Motorrahmen (17) verbunden ist, der an dem Rahmen (1) befestigt ist; wobei die Vakuumabdeckung (14) eine linke Vakuumabdeckung, die mit einem zweiten Vakuumanschluss versehen ist, und eine rechte Vakuumabdeckung, die mit einem Staubauslass versehen ist, umfasst, wobei die linke und rechte Vakuumabdeckung an dem Motorrahmen (17) befestigt sind; wobei die linke Blattabdeckung (5) und die rechte Blattabdeckung (6) eine trichterartige Struktur aufweisen; wobei der Rahmen (1) auf der Vorderseite mit einer Frontplatte (18) versehen ist, auf der eine Reihe von Schaltern vorgesehen sind; wobei das Sägeblatt (3) mit einer Begleitplatte (19) versehen, die sich auf und ab bewegt und/oder zusammen mit dem Sägeblatt (3) schräg schwingt, wobei die Begleitplatte (19) mit einer Schutzabdeckung (20) verbunden ist.

## Revendications

1. Scie comprenant un châssis (1) pourvu d'une planche de table de travail (2), d'une lame de scie (3) agencée entre le châssis (1) et la planche de table de travail (2) ; dans laquelle la lame de scie (3) est entraînée par un moteur de lame de scie (4), et est agencée entre un cache-lame gauche (5) et un cache-lame droit (6) qui sont situés sous la planche de table de travail (2), le cache-lame gauche (5) et le cache-lame droit (6) formant un espace fermé ; et dans laquelle une première sortie de poussière (7), située sous le cache-lame gauche (5) et le cache-lame droit (6), est reliée à un aspirateur, qui est entraîné par le moteur de lame de scie (3) ;
dans laquelle l'aspirateur inclut une première poulie (8), qui est reliée à l'extrémité arrière d'un arbre de moteur (9) du moteur de lame de scie (4) et à une seconde poulie (11) par le biais d'une courroie (10) ; la seconde poulie (11) entraîne une lame de vide (13) dans un cache de vide (14) pour tourner via un arbre de transmission (12), le cache de vide (14) étant pourvu d'un orifice de vide et d'une seconde sortie de poussière, la première sortie de poussière (7) étant reliée à l'orifice de vide via un tube de vide (21), la seconde sortie de poussière étant reliée à un sac à poussière (15) ; et
dans laquelle le cache-lame gauche (5) est pourvu d'une encoche, qui est intérieurement pourvue d'un cache mobile (16) en liaison active, le cache mobile (16) étant inséré dans l'encoche puis fixé par une vis ou par des boucles.

2. Scie selon la revendication 1, dans laquelle le moteur de lame de scie (4) est relié à un châssis de moteur (17), qui est fixé au châssis.

3. Scie selon la revendication 1, dans laquelle le cache de vide (14) inclut un cache de vide gauche pourvu d'un second orifice de vide et un cache de vide droit pourvu d'une sortie de poussière, les caches de vide gauche et droit étant fixés au châssis de moteur (17).

4. Scie selon l'une quelconque des revendications précédentes, dans laquelle le cache-lame gauche (5) et le cache-lame droit (6) sont d'une structure de type entonnoir.

5. Scie selon l'une quelconque des revendications précédentes, dans laquelle le châssis (1) est pourvu sur le côté avant d'un panneau avant (18), sur lequel sont situés un certain nombre de commutateurs.

6. Scie selon l'une quelconque des revendications précédentes, dans laquelle la lame de scie (3) est pourvue d'une plaque d'accompagnement (19) qui monte et descend et/ou oscille de manière oblique avec la lame de scie (3), la plaque d'accompagnement (19) étant reliée à un cache de protection (20).

7. Procédé d'utilisation de la scie selon l'une quelconque des revendications 1 à 6, le procédé comprenant les étapes suivantes :
(1) mise en place de matières premières sur la planche de table de travail (2), et allumage de la scie de telle sorte que le moteur de lame de scie (4) entraîne la lame de scie (3) à tourner et découper ;
(2) la poussière qui résulte de la découpe entre dans un espace fermé formé par les caches-lames gauche et droit (5, 6), si bien que la poussière ne déborde pas ;
(3) le moteur de lame de scie (4) entraîne la première poulie (8) à tourner, ce qui entraîne la seconde poulie (11) à tourner par le biais d'une courroie (10) ; la seconde poulie (11) entraîne la lame de vide (13) à tourner en entraînant l'arbre de transmission (12), de telle sorte qu'une pression négative est formée dans le cache de vide (14) et la poussière à l'étape (2) est inhalée dans le cache de vide (14) ; et
(4) la poussière dans le cache de vide (14) entre dans le sac à poussière (15) via la seconde sortie de poussière, le sac à poussière (15) étant en liaison active et permettant un nettoyage régulier ;
dans lequel le cache-lame gauche (5) est pourvu d'une encoche, qui est intérieurement pourvue d'un cache mobile (16) qui est en liaison active, le cache mobile (16) étant inséré dans l'encoche puis fixé par une vis ou par des boucles ; le moteur de lame de scie (4) est relié au châssis de moteur (17), qui est fixé au châssis (1) ; le cache de vide (14) inclut un cache de vide gauche pourvu d'un second orifice de vide et un cache de vide droit pourvu d'une sortie de poussière, les caches de vide gauche et droit étant fixés au châssis de moteur (17) ; le cache-lame gauche (5) et le cache-lame droit (6) sont d'une structure de type entonnoir ; le châssis (1) est pourvu sur le côté avant d'un panneau avant (18), sur lequel sont situés un certain nombre de commutateurs ; la lame de scie (3) est pourvue d'une plaque d'accompagnement (19) qui monte et descend et/ou oscille de manière oblique avec la lame de scie (3), la plaque d'accompagnement (19) étant reliée à un cache de protection (20).
